# EUROPÄISCHE PATENTSCHRIFT

(11) **EP 0 823 104 B1**
(45) Veröffentlichungstag und Bekanntmachung des Hinweises auf die Patenterteilung: **03.02.1999**
(21) Anmeldenummer: 96912007.0
(22) Anmeldetag: 09.04.1996
(51) Int. Cl.: G07F 7/08, G07F 7/02

(54) **ELEKTRONISCHE BÖRSENKARTE UND VERFAHREN ZUM WIEDERAUFLADEN EINER ELEKTRONISCHEN BÖRSENKARTE**
ELECTRONIC CREDIT CARD AND PROCESS FOR RELOADING AN ELECTRONIC CREDIT CARD
CARTES ELECTRONIQUES DE CREDIT ET PROCEDE DE RECHARGEMENT DE CARTES ELECTRONIQUES DE CREDIT

(30) Priorität: 20.04.1995 EP 95105932
(43) Veröffentlichungstag der Anmeldung: 11.02.1998
(73) Patentinhaber: SIEMENS AKTIENGESELLSCHAFT, 80333 München (DE)
(72) Erfinder: SCHRENK, Hartmut, D-85540 Haar (DE)
(86) Internationale Anmeldenummer: EP9601521
(87) Internationale Veröffentlichungsnummer: WO9633475

(56) Entgegenhaltungen:
- EP-A- 0 345 108
- EP-A- 0 378 454
- EP-A- 0 519 847
- EP-A- 0 646 892
- FR-A- 2 608 809
- US-A- 4 204 113

## Beschreibung

Die Erfindung bezieht sich auf ein Verfahren zum Wiederaufladen einer elektronischen Börsenkarte für einen bargeldlosen Zahlungsverkehr mit einer integrierten Halbleiter-Schaltungsvorrichtung bestehend aus zumindest einer Adreß- und Steuerlogikschaltung und einem nichtflüchtigen Speicher, wobei zumindest ein Teil des nichtflüchtigen Speichers löschbar ist, und die Speicherplätze des zum Speichern der jeweiligen Werteinheiten der Börsenkarte vorgesehenen Bereiches des nichtflüchtigen Speichers in Teilbereiche jeweils unterschiedlicher Wertigkeit aufgeteilt sind, wobei ein Löschen der Speicherplätze nur für sämtliche Speicherplätze eines Teilbereiches bestimmter Wertigkeit gleichzeitig möglich ist, und jeder Teilbereich nur gelöscht werden kann, nachdem das Einschreiben eines Übertragwertes in einen zuvor unbeschriebenen Speicherplatz des Teilbereiches der nächsthöheren Wertigkeit erfolgt ist, und bezieht sich auf eine elektronische Börsenkarte für einen bargeldlosen Zahlungsverkehr mit einer integrierten Halbleiter-Schaltungsvorrichtung zur Durchführung des Verfahrens.

Zum bargeldlosen Bezahlen von Waren oder zum Abrechnen von Dienstleistungen und dergleichen sind datengesteuerte Zahlungssysteme in Form von Datenaustauschsystemen bekannt, bei denen die hierbei verwendeten Börsenkarten als ein wesentliches Element einen nichtflüchtigen elektronischen Datenspeicher enthalten, auf den über elektrische Kontakte an der Kartenoberfläche zugegriffen werden kann. Über eine Dateneinbzw. Datenausgabeeinrichtung (Verkaufsterminal) wird von einer Recheneinheit bei jedem Gebrauch auf den Speicherinhalt zugegriffen, der dabei gegebenenfalls geändert wird. Speziell bei der Verwendung von vorausbezahlten Datenträgeranordnungen, die eine anonyme Bezahlung von Waren oder gebührenpflichtigen Diensten ermöglichen, muß sichergestellt sein, daß der Wert der Karte durch Manipulation nur verringert, nicht aber erhöht werden kann.

Wiederaufladbare Börsenkarten sind bisher vorwiegend als Prozessorkarten realisiert worden, da die höhere Rechenleistung eines Mikroprozessord eine Kontrolle der Wiederaufladung vereinfachte. In Low-End-Zahlungssystemen finden jedoch, insbesondere bei vorausbezahlten Karten, zunehmend intelligente Speicherkarten Verwendung. Die von der Anmelderin derzeit verwendete Chipkarte zeigt, daß kryptologische Echtheits- und Berechtigungsprüfungen der Teilnehmer an Zahlungsvorgängen heute auch mit Speicherchips auf vergleichbarem Sicherheitsniveau realisierbar sind. Die elektronische Überwachung der übertragenen Geldbeträge mit den über Mikroprozessoren realisierten Verfahren würden jedoch solche Karten zu aufwendig machen.

Bei wiederaufladbaren Börsenkarten, sowohl auf Mikroprozessor- als auch auf Speicherbasis, ist grundsätzlich davon auszugehen, daß nicht nur ein Systemgeheimnis, sondern auch ein Kryptoalgorithmus für Echtheitsprüfungen vorhanden ist. Trotzdem sind verschiedene Risiken zu betrachten. Zum einen kann auch nach elektronischer Authentifikation der am Wiederaufladen beteiligten Partner nicht ausgeschlossen werden, daß ein Betrüger durch Manipulation der Übertragungsdaten den Aufbuchungswert der Börsenkarte manipuliert. Zum weiteren besteht die Aufbuchung aus einem Lösch-Schreibzyklus des nichtflüchtigen Zahlbereichs, bei dem die Börsenkarte vorübergehend auch einen höheren Geldwert annehmen kann. Eine Unterbrechung des Ladevorgangs in einem geeigneten Augenblick würde dann zu einem unberechtigt hohen Börsenwert führen. Ein Läsch-Schreibzyklus setzt sich hierbei aus zwei Vorgängen zusammen: zuerst Löschen des vollgeschriebenen Zählers oder von Teilbereichen des Zählers, und danach Einstellung bzw. Einschreiben des neuen Zählerstandes. Löschen ist hierbei definitionsgemäß der Vorgang, bei dem eine größere Anzahl von Informationswerten (Bits) auf Speicherplätzen gleichsinnig geändert wird. Erst durch Schreiben wird anschließend das gewünschte spezifische Bitmuster erzeugt. Entwerten durch Schreiben einzelner Bits muß aus sicherheitstechnischen Gründen der elektrische Entladevorgang von Speicherplätzen sein, damit bei eventueller Selbstentladung der Zellen der Börsenwert nur abnehmen kann. Löschen ist damit der risikobehaftete, werterhöhende Vorgang. Im Zeitraum zwischen dem Löschen und dem Schreiben nimmt der Zähler als Zwischenzustand vorübergehend einen Maximalwert an, der erst durch die Schreibvorgange wieder korrigiert wird. Das Manipulationsrisiko bei der bekannten Chipkarte liegt in diesem unvermeidbaren Zwischenzustand.

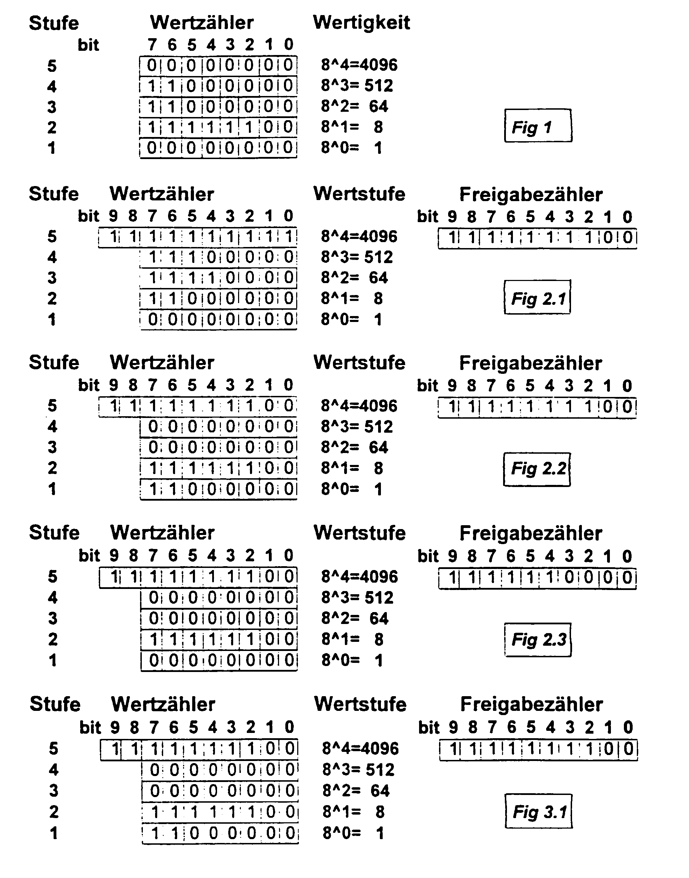

Gemäß der schematischen Darstellung nach Fig. 1 soll zunächst das Funktionsprinzip einer heutigen, vorbezahlten Karte, die nach einem vollständigen Verbrauch des Börsenwertes nicht erneuert wird, erläutert werden. Der Abbuchvorgang beispielsweise in einer vorbezahlten Telefon-Wertkarte wird in der Regel mit einem Sicherheitszähler als "elektronischer Abakus" realisiert, beispielsweise durch das in der EP 0 321 727 B1 beschriebene Verfahren. Ein nichtflüchtiger Wertzähler ist in der Weise elektronisch abgesichert, daß sein Wert durch die Programmiervorgänge niemals erhöht werden kann. Konventionelle Binärzähler, bei denen fortlaufend Bits gelöscht und geschrieben werden müssen, scheiden als Wertzähler aus.

Gemäß Fig. 1 besteht die in der Karte verwendete Zählanordnung aus einem Wert zähler mit fünf Stufen zu je 8 EEPROM-Zellen, die als Oktalzähler verschaltet sind. Jeder Stufe ist eine festgelegte Wertigkeit zugeordnet. Im Oktalzähler hat in benachbarten Wertstufen ein Bit der höherwertigen Stufe jeweils die 8-fache Wertigkeit eines Bits der darunter liegenden Stufe. In Telefonkarten sind den Bits der fünf 8-Bit-Stufen jeweils die Werteinheiten 1, 8, 64, 512 bzw. 4096 zugeordnet. Bei dem Zahlenbeispiel gemäß Fig. 1 wird beispielsweise bei der Initialisierung einer 12-DM-Karte (= 1.200 Werteinheiten) ein entsprechender Zählerstand eingestellt (1.200 = 2*512 + 2*64 + 6*8). Der theoretische, maximale Zählumfang der Karte von 8⁵ = 32768 Einheiten wird in der Regel nicht ausgenützt, im angegebenen Beispiel befindet sich daher kein einziges Bit in der obersten Zählstufe 5. Vor der Entwertung sind die Zählerbits gelöscht und haben gemäß der vorliegend verwendeten Definition den logischen Zustand "1". Zur Entwertung wird der fällige Betrag auf die fünf Zählerstufen aufgeteilt und die betreffende Anzahl von Bits durch Schreiben von "1" nach "0" entwertet. Die unteren vier Wertstufen 1 bis 4 sind als EEPROM, die oberste Stufe 5 ist als PROM ausgebildet. Sind alle Bits einer unteren Wertstufe verbraucht, so muß über das Terminal vor weiteren Abbuchungen ein interner Umbuchvorgang eingeschoben werden, bei dem die 8 vollgeschriebenen Bits einer Stufe wieder nach "1" gelöscht werden, nachdem zuvor ein geläschtes Bit der darüberliegenden Stufe durch Schreiben nach "0" entwertet worden ist. Der Umbuchvorgang selbst ist wertneutral, da sich Entwertung und Aufwertung ausgleichen. Für eine absichtliche Unterbrechung des Umbuchvorgangs gibt es keinen Betrugsanreiz, da die Entwertung zuerst vorgenommen wird. Der Zählerstand der Telefonkarte kann vom vorgegebenen Anfangswert mittels Schreib- und Löschvorgängen nur herabgesetzt werden und ist damit vom Konzept her schwer manipulierbar.

Gemäß der Lehre der EP-A-O 378 454 werden bei einer wiederaufladbaren Speicherkarte eine Anzahl P von Speicherzellen nacheinander entwertet. Sobald alle diese Speicherzellen entwertet sind, wird ein Zähler (compteur de pages, CPP) um Eins erhöht, und sämtliche P Speicherzellen werden gelöscht - d.h. auf Kosten des Zählerstands CPP aufgewertet -, was einer internen Umbuchung entspricht, wobei der Zähler CPP einen höchstwertigen Speicherteilbereich darstellt.

Solche Umbuchvorgänge sind nur solange möglich, bis der Zähler CPP einen Wert Z erreicht, welcher in einem Kreditzähler (compteur de consigne oder compteur de crédit, CPC) abgelegt ist. Die Wiederaufladung erfolgt durch einen Schreibvorgang in einem Freigaberegister, nämlich durch Erhöhung des Kreditzählers CPC.

Eine Verwendung mehrerer Speicherteilbereiche unterschiedlicher Wertigkeit sowie ein Übertrag von hohen zu niedrigen Werten sind für die Organisation eines Kartenspeichers aus der EP-A-O 345 108 bekannt.

Der Erfindung liegt die Aufgabe zugrunde, ein Verfahren bzw. eine Vorrichtung zur Verfügung zu stellen, welche mit einem vergleichsweise geringen Zusatzaufwand eine manipuliersichere Wiederaufladung mit einem beliebigen Börsenwert ermöglicht, wobei gleichzeitig die derzeit verwendeten Konzepte von Chipkarten im wesentlichen beibehalten werden sollen.

Diese Aufgabe wird durch ein Verfahren zum Wiederaufladen einer Börsenkarte mit einer Halbleiter-Schaltungsvorrichtung gemäß Anspruch 1 und durch eine im Anspruch 9 angegebene Börsenkarte gelöst.

Der Erfindung liegt zunächst die Erkenntis zugrunde, daß neue Werteinheiten auf der Börsenkarte tatsächlich nicht im physikalischem Sinne neu geladen werden, sondern durch Einführung eines unabhängig zu schreibenden Freigabewertes lediglich freigegeben werden. Auf diese Weise wird unter Beibehaltung der wesentlichen Konzepte der bisherig verwendeten Speicherkarten eine manipulationsgeschützte Wiederaufladung möglich, und zwar mit einem lediglich geringen Zusatzaufwand. Die Börsenkarte erreicht in der Phase der Freigabe zu keinem Zeitpunkt einen erhöhten Geldwert. Das Konzept der gesicherten internen Umladung des Sicherheitszählers wird auch für die Wiederaufladung mit genutzt. Der kritische Vorgang des Löschens wird im Rahmen der eigentlichen Wiederaufladung gar nicht durchgeführt und aus der Aufladung ausgegliedert. Während einer Wiederaufladung wird nur geschrieben.

Dem Prinzip der Erfindung folgend wird der Wert zähler der Börsenkarte in der aufladbaren elektronischen Börsenkarte im Zählumfang durch zumindest ein Freigaberegister in der Weise erweitert, daß er die Summe aller möglichen Aufladungen bestimmt. Für das zusätzlich in der Börsenkarte vorgesehene Freigaberegister sind nicht übermäßig viele zusätzliche Speicherplätze erforderlich, da es sich zunächst lediglich um die höchstwertigen Bits im Wertzähler handelt, die einzeln jeweils viele Werteinheiten beinhalten. Im Aufladeterminal werden die Werteinheiten des vergrößerten Wert zählers durch Schreiboperationen für die Abbuchung erst freigegeben oder, anders ausgedrückt, im Wertzähler aufgebucht. Die freigegebenen Werteinheiten erlauben anschließend die Durchführung wertneutraler Umbuchvorgänge innerhalb des Wertzählers, die erst im Verkaufsterminal im Rahmen einer Abbuchung veranlaßt werden, und die erprobte Manipuliersicherheit des Sicherheitszählers in der Börsenkarte ohne zusätzliches Risiko ausnützen.

Erfindungsgemaß sind den Werteinheiten von zumindest den Speicherplätzen des höchstwertigen Teilbereiches in dem Freigaberegister der Börsenkarte zu speichernde Freigabewerte zugeordnet, welche entweder einen Freigabe- oder einen Sperrzustand für die jeweils zugeordneten Werteinheiten der Speicherplätze des wenigstens höchstwertigen Teilbereiches repräsentieren. Eine Erhöhung des Kartenwertes der Börsenkarte ist lediglich durch Änderung eines der Werteinheit eines Speicherplatzes zugeordneten Freigabewertes vom Sperr- in einen Freigabezustand möglich.

Hierbei kann bei einer bevorzugten Ausführung der Erfindung vorgesehen sein, daß die aufgrund des im Freigaberegister geschriebenen Freigabewertes ermöglichte Freigabe einer zugeordneten Werteinheit in dem Teilbereich der Speicherplätze einer bestimmten Wertigkeit zum Löschen des Teilbereiches der nächstniedrigeren Wertigkeit verwendet wird. Die Wiederaufladung der Börsenkarte wird hierbei durch einen Schreibvorgang von einem oder mehreren Freigabewerten im Freigaberegister zur Freigabe der zugeordneten Werteinheiten in einem Teilbereich des Speichers ausgeführt.

In bevorzugter Weise wird das Schreiben einer Werteinheit in einem Teilbereich des Speichers und damit der Verbrauch eines nachzuladenen Geldwertes erst dann ermöglicht, nachdem ein zugeordneter Freigabewert im Freigaberegister geschrieben worden ist.

Bei einer konkreten Ausgestaltung bzw. Durchführung des erfindungsgemäßen Verfahrens ist vorgesehen, daß die Aufladung der Börsenkarte in einem Ladeterminal in vorbestimmten Schrittweiten oder deren Vielfachen entsprechend der Wertigkeit der bezüglich der höchstwertigen Wertstufe unmittelbar darunterliegenden und zu löschenden Wertstufe durchgeführt wird.

Bei einer weiterhin bevorzugten Ausführung der Erfindung kann vorgesehen sein, daß der sicherheitsrelevante Ladevorgang der Börsenkarte nur wertmindernde Schreibvorgange oder wertneutrale Umbuchungen beinhaltet, und vor einer Freigabe einer Werteinheit eine Echtheitsprüfung der Börsenkarte im Ladeterminal vorgenommen wird. Das Verkaufsterminal sendet dabei an die Börsenkarte eine frei wählbare Challenge und dazu die unter Kenntnis eines gemeinsamen Geheimnisses berechnete Response. Die Börsenkarte vergleicht intern die vom verkaufsterminal gesendete Response mit dem selbsterrechneten Wert. Bei Übereinstimmung wird durch chipinterne Logik ohne zusätzliche externe Datenübertragung jeweils ein Bit im Freigaberegister freigegeben. Eine externe Einflußmöglichkeit auf den Aufladebetrag besteht nicht. Bei Übereinstimmung wird durch chipinterne Logik ohne zusätzliche externe Datenübertragung jeweils ein Bit im Freigaberegister freigegeben. Eine externe Einflußmöglichkeit auf den Aufladebetrag besteht nicht. Die gesamte Sicherheitsüberprüfung beim Wiederaufladen läßt sich durch (gegenseitige) Authentifikation mittels einer zuverlässigen kryptologischen Einwegfunktion absichern.

Der sicherheitskritische Löschvorgang des Ladens ist als Umbuchungsvorgang in den Abbuchungsvorgang am Verkaufsterminal integriert. Die Übernahme eines Restwertes der Börsenkarte vom Zustand vor der Aufladung ergibt sich durch das Konzept von selbst, weil die freigegebenen Einheiten im Wertzähler zum bisherigen Stand des Wertzählers ohne Zusatzaufwand hinzuaddiert werden.

Bei einer Ausführung der Erfindung kann der Gesamtkartenwert durch die Aufladung durch den Wert eines Bits im Freigaberegister auf einen Mindestwert festgelegt sein. Die manipuliergeschützte Aufladung um beliebig einstellbare, größere Geldwerte ist hierbei erst ab Freigabe von zwei Bits im Freigaberegister möglich, weil nur dann unter allen Restwertbedingungen die erforderlichen Umladungen im Wert zähler unter Benutzung eines ersten Freigabebits durchführbar sind und gleichzeitig die Karte sich dabei noch in einem niederwertigen Zustand befindet.

Sind die Ladewerte kleiner als zwei Wertbits im Freigaberegister, kann es passieren, daß der Wertausgleich im Wert zähler bei nur einem Freigabebit erst nach der Freigabe des Bits im Freigaberegister durchgeführt werden kann und damit weniger geschützt ist. Ein Betrüger könnte dann theoretisch die Börsenkarte vor Abschluß des Wertausgleichs mit Vorteil aus dem Ladeterminal entfernen. Dieses Betrugsrisiko bei kleineren Aufladebeträgen kann durch ein zusätzliches, nichtflüchtiges Backup-Bit innerhalb der Börsenlogik der Börsenkarte beseitigt werden, welches analog zu einer Backup-Logik im Wertzahler der Börsenkarte arbeitet: Es wird beispielsweise gleichzeitig mit dem Freigabebit geschrieben. Zurückgesetzt wird es über das Ladeterminal nach Abschluß des Entwertungsvorganges durch eine Sicherheitsprozedur ähnlich zu der beim Schreiben eines Freigabebits. Im Falle eines betrügerischen Abbruchs bleibt das Backup-Bit gesetzt, so daß diese Börsenkarte durch routinemäßige Überprüfung im Verkaufsterminal auf jeden Fall erkannt und abgewiesen wird.

Sollen sehr viele, kleine Aufladebeträge zugelassen werden, kann es notwendig sein, den Wert zähler so zu konfigurieren, daß der Kontrollbereichanteil am Wertzähler vergrößert und der übrige Wertspeicher entsprechend verkleinert ist. In jedem Fall setzt aber die uneingeschränkte gesicherte Einstellung beliebiger Aufladebetrage immer einen Mindest-Aufladebetrag entsprechend zweier Bits im Freigaberegister voraus. Die maximale Werterhöhung je Aufladung ist dagegen bei dieser Zählerkonfiguration in vorteilhafter Weise nicht eingeschränkt.

Wenn das gesamte Zählvolumen des Wert zählers auf sehr viele, kleine Aufladeeinheiten verteilt werden soll, die dafür sehr häufig aufzuladen sind, könnte der Kontrollbereich und der zugordnete Freigabebereich auch selber wieder als (Oktal-) Zähler ausgelegt werden. In diesem Fall unterliegt jedoch auch der Maximalbetrag, der bei einem einzigen Ladevorgang durch Schreiben mehrerer Freigabebits im Wert zähler freigegeben werden kann, zusätzlichen Einschränkungen. Bei wertneutralen Umladungen innerhalb der oberen Zählbereiche kann nämlich die direkte Zuordnung der Bits im Freigaberegister (geändert im Ladeterminal) und im Wertzahler (geändert im Verkaufsterminal) verloren gehen, so daß der Börseninhaber tatsächlich nicht den vollen Aufladewert verbrauchen kann. Diese Einschränkungen im maximalen Betrag bei einem einzigen Auf ladevorgang können wiederum durch eine zusätzliche Flagsteuerung beseitigt werden, wobei diese Zählkonfiguration im wesentlichen nur für spezielle Zählanforderungen interessant sein dürfte.

Bei einer bevorzugten Ausgestaltung einer erfindungsgemäßen Börsenkarte kann vorgesehen sein, daß vor der Entwertung eines Bits im Kontrollbereich des Wert zählers chipintern nicht nur geprüft wird, ob das Zusatzbit noch gelöscht "1" ist, sondern auch ob das zugeordnete Freigabebit den Freigabezustand "0" besitzt. Hierbei kann bei einer einfachen Ausgestaltung vorgesehen sein, daß den beiden Speicherbereichen unabhängige Ausleseschaltungen mit getrennten Spaltendekodern zugeordnet sind, um eine vergleichsweise komplizierte serielle Abfrage beider Zähler zu vermeiden. Es ist außerdem sinnvoll, Wertzähler inklusive Kontrollbereich einerseits und Freigaberegister andererseits mit einer unterschiedlichen Bewertungsspannung am Steuergate der Speicherzellen zu betreiben. Wie bereits erwähnt, muß der Wertzähler in der Weise ausgelegt sein, daß der entladene Zustand der EEPROM-Zellen auch dem neutralen, geschriebenen und entwerteten Zustand entspricht. Das Schreiben im Freigaberegister ist dagegen nicht entwertend, sondern werterhöhend. Er ist deshalb durch Wahl einer niedrigeren Gatespannung vorteilhaft in der Weise auszulegen, daß eine Speicherzelle, die durch einen Stress in den Neutralzustand zurückgefallen ist, als "1" oder nicht freigegeben bewertet wird (d.h. die verwendete Definition von gelöscht = logisch "1" wird in vorteilhafter Weise beibehalten).

Die Erfindung ist in der nachfolgenden Beschreibung anhand eines in der Zeichnung dargestellten Ausführungsbeispieles im einzelnen beschrieben.

In der Zeichnung zeigt
Fig. 1 das Grundprinzip eines Sicherheitszählers in einer herkömmlichen Speicherkarte,
Fig. 2 das Prinzip der Aufladung durch Freigabe von Restbetragen mit Restwertübernahme gemäß der Erfindung, und
Fig. 3 die Aufladung mit Freigabe und Umladung des Wertzahlers bei einer Wiederaufladung der Börsenkarte mit 10000 Werteinheiten.

Fig. 2 zeigt ein Ausführungsbeispiel der Erfindung, bei dem die Speicherplätze des zum Speichern der jeweiligen Werteinheiten der Börsenkarte vorgesehenen Bereiches des nichtflüchtigen Speichers in Teilbereiche (Stufen 1 bis 5) jeweils unterschiedlicher Wertigkeit (Stufenwerte 1, 8, 64, 512, 4096) aufgeteilt sind, ein Löschen der Speicherplätze nur für sämtliche Speicherplätze eines Teilbereiches bestimmter Wertigkeit gleichzeitig möglich ist, und jeder Teilbereich nur gelöscht werden kann, nachdem das Einschreiben eines Übertragwertes in einen zuvor unbeschriebenen Speicherplatz des Teilbereiches der nächsthöheren Wertigkeit erfolgt ist. Erfindungsgemaß sind den Werteinheiten von zumindest den Speicherplätzen des höchstwertigen Teilbereiches (Stufe 5) in einem Freigaberegister der Börsenkarte zu speichernde Freigabewerte zugeordnet, welche entweder einen Freigabe- ("0") oder einen Sperrzustand ("1") für den jeweils zugeordneten Wertzustand der Speicherplätze des wenigstens höchstwertigen Teilbereiches repräsentieren, und eine Erhöhung des Kartenwertes der Börsenkarte lediglich durch Änderung eines dem Wert zustand eines Speicherplatzes zugeordneten Freigabewertes vom Sperrin einen Freigabezustand ermöglicht wird. Bei dem Zahlenbeispiel gemäß Fig. 2 wird beispielsweise bei der Initialisierung einer 100-DM-Karte (= 10.000 Werteinheiten) ein entsprechender Zählerstand eingestellt (10.000 = 2*4096 + 3*512 + 4*64 + 2*8), wobei von den 8 geschriebenen Bits im Wert zahl er der obersten Stufe 5 aufgrund der geschriebenen Bits im Freigaberegister lediglich 2 Bits freigegeben werden. In der wiederaufladbaren Börsenkarte ändert sich das prinzipielle Zählprinzip der vorbekannten Telefonkarten nicht, wie im folgenden näher erläutert wird. Die oberste Zählstufe 5 des Wertzählers kontrolliert als PROM wieder das Aufladen der benachbarten Stufe 4 usw. Sie erhält jetzt aber innerhalb des Wertzählers die Zusatzfunktion als Kontrollbereich für Wiederaufladungen. Unter Wiederaufladung wird im folgenden die Freigabe eines oder mehrerer Speicherbits im Kontrollbereich zum Löschen der darunter liegenden Wertstufe 4 verstanden. Die Größe des Kontrollbereichs begrenzt die Summe aller für die Karte erlaubten Zahlungsvorgänge einschließlich der Aufladungen. Im Ausführungsbeispiel können bei einer Größe von 10 Bit beispielsweise insgesamt maximal 10*4096 = 40960 Werteinheiten oder über 400 DM nachgeladen werden. Sollte eine erweiterte Geldbörsenanwendung einschließlich Aufladungen mehr Zähleinheiten erfordern, läßt sich der Kontrollbereich auch als zusätzliche, höchstwertige sechste Zählerstufe ausführen. Der kumulierte Zählumfang steigt dann auf über 300.000. Für Geldbörsen kommt darüber hinaus auch eine andere Ausführung des Sicherheitszählers als die des beschriebenen Oktalzählers in Frage.

Dem Kontrollbereich im Wertzähler, d.h. der obersten Stufe 5 des Wert zählers, ist ein gleich aufgebautes Duplikat als Freigaberegister zugeordnet bzw. vorgeschaltet. Das Schreiben eines Bits im Kontrollbereich und damit der Verbrauch eines nachzuladenden Geldwertes ist erst möglich, nachdem das zugeordnete Bit im Freigaberegister geschrieben worden ist. Der Aufladevorgang der Börsenkarte in einem Ladeterminal besteht aus Schreibvorgängen von einem oder mehreren Bits im Freigaberegister zur Freigabe der zugeordneten Bits im Kontrollzählerbereich. Die Aufladung erfolgt also in festen Schritten oder deren Vielfachen entsprechend dem Wert der unmittelbar darunterliegenden und zu löschenden Wertstufe 4. Der Inhaber der Börsenkarte wird jeweils beim Schreiben der Freigabebits mit dem zugeordneten Geldwert belastet.

Im folgenden soll ein konkretes Zahlenbeispiel für eine Aufladung der Börsenkarte durch Freigabe mit Umbuchung von Festbeträgen gemäß Fig. 2.1 bis 2.3 erläutert werden. Der Kontrollbereich des Wert zählers ist im Beispiel zur Erhöhung des kumulierten Zählumfangs von 8 auf 10 Bit erhöht. Rechts neben dem Kontrollbereich ist der zugeordnete Freigabebereich dargestellt. Fig. 2.1 zeigt den Zustand von Wertspeicher und Freigaberegister bei der Ausgabe der Börsenkarte mit 10 000 Werteinheiten. Diese Werteinheiten setzen sich aus zwei Anteilen zusammen: einem Anteil von 2*4096 Einheiten, die im Kontrollbereich des Wert zählers durch die zwei geschriebenen Bits im Freigaberegister freigegeben sind, und aus einem Anteil von 1808 Einheiten, die sich über den Zustand "1" im Wertzähler auf die Wertstufen 2, 3 und 4 verteilen (= 3*512 + 4*64 + 2*8).

Fig. 2.2 zeigt die gleiche Karte, nachdem sich der Kartenwert auf einen Restwert von 50 Einheiten (entsprechend 50 Pfennig) verringert hat (6*8 + 2). Beim Aufladevorgang werden zwei weitere Bits im Freigaberegister geschrieben und damit im Kontrollbereich des Wertzählers freigegeben. Der Wert der Börsenkarte hat sich dadurch auf 2*4096 + 50 = 8242 Einheiten erhöht (Figur 2.3).

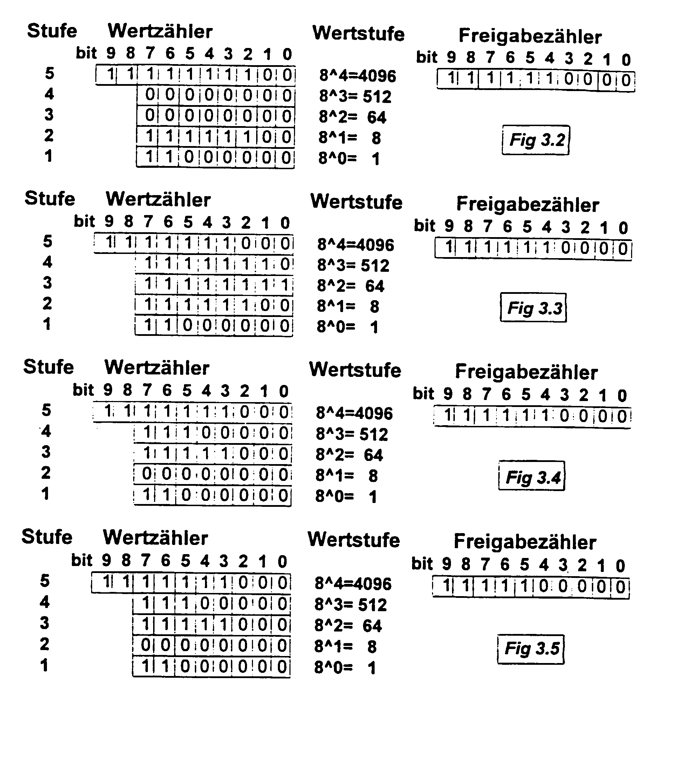

Die Aufladung der Karte durch Freigabe und Umbuchung frei wählbarer Beträge, sowie ein Wertausgleich im Wertzähler der Börsenkarte wird wie folgt durchgeführt. Ein Merkmal des bisher beschriebenen Aufladekonzeptes ist hierbei, daß die Aufladung nicht in frei wählbaren Schritten, sondern nur in Stufen entsprechend dem Wert der zweitobersten Wertstufe 4 erfolgt. Diese Einschränkung läßt sich jedoch in gewissen Grenzen umgehen, wenn man auch den Wert zähler selbst manipulationsgesichert in den Auf ladevorgang einbezieht, vgl. Fig. 3. Wenn beispielsweise die letzte Umbucheinheit den Wert des Wert zählers über den gewünschten Aufladebetrag hinaus erhöhen würde, kann die Differenz vor dem Schreiben des letzten Freigabebits durch Schreiben im Wertspeicher ausgeglichen werden. Reicht der im Wertzähler verbliebene Restwert dazu nicht aus, so kann über das Verkaufsterminal auch ein wertneutraler Umbuchvorgang im Wert zähler unter Verwendung des schon freigegebenen Bits im Kontrollbereich veranlaßt werden.

Ein Wertausgleich während des Aufladens durch Schreiben im Wert zähler stellt kein Betrugsrisiko dar, wenn er vor dem Schreiben des letzten Freigabebits stattfindet. Ein Betrüger, der während der Schreibphase den Vorgang absichtlich unterbrechen oder unterdrücken würde, hätte dadurch nur einen Wertverlust durch den fehlenden Betrag des Freigabebits. Eventuelle Manipulation durch Unterdrückung der in den Wertzähler einzuschreibenden Ausgleichsdaten ist vom Terminal erkennbar, wenn der Wert zähler vor der abschließenden Freigabe des letzten Freigabebits noch einmal überprüft wird. Durch gegenseitige Authentifikation wird vor der Freigabe des letzten Bits der Börsenchip mit seinem aktuellen Wertzählerstand durch das Ladeterminal authentifiziert. Die korrekte Chip-Response ist damit auch eine Signatur des aktuellen Zählerstandes. Ist diese Response falsch, so kann der Schreibvorgang im Freigaberegister unterdrückt werden. Ein Betrüger hätte dann nur einen Wertverlust zu tragen.

Im folgenden soll ein konkretes Zahlenbeispiel für die Karte mit einer Aufladung und einer Umbuchung frei wählbarer Beträge erläutert werden. Fig. 3.1 zeigt den Zustand der Börsenkarte von Fig. 2 mit einem Restwert von 50 Einheiten. Diese Karte soll um 10 000 Einheiten oder 100 DM bei Übernahme des Restwertes manipuliersicher aufgeladen werden. Drei Bits im Freigaberegister würden eine Werterhöhung um 3*4096 = 12288 bedeuten, d.h. 2288 Einheiten zuviel. Ohne Betrugsmöglichkeit werden zunächst 2*4096 Einheiten über den Freigaberegister freigegeben und damit der Kartenwert auf 8242 inklusive Restwert erhöht (Fig. 3.2). Als nächstes wird der Überzahlungsanteil von 2288 = 2*512 + 3*64 + 6*8 Einheiten vor Freigabe des 3. Bits im Freigaberegister vom Wertzähler subtrahiert. Dieser Vorgang besteht im angegebenen Beispiel aus zwei Schritten. Im ersten Schritt wird wertneutral eines der freigegebenen Bits zur Umladung der Wertstufen 4 bzw. 3 verwendet (Fig. 3.3). Von den nunmehr gefüllten Wertzählerstufen wird im zweiten Schritt der Überzahlungsanteil abgebucht. Der Kartenwert geht dabei vorübergehend auf 5952 Einheiten zurück (Fig. 3.4). Erst mit dem Schreiben des 3. Freigabebits erreicht die Börsenkarte den vorgesehenen Sollwert von 10050 Einheiten und der Ladevorgang ist abgeschlossen.

## Patentansprüche

1. Verfahren zum Wiederaufladen einer elektronischen Börsenkarte für einen bargeldlosen Zahlungsverkehr mit einer integrierten Halbleiter-Schaltungsvorrichtung bestehend aus zumindest einer Adreß- und Steuerlogikschaltung und einem nichtflüchtigen Speicher, wobei zumindest ein Teil des nichtflüchtigen Speichers löschbar ist, und die Speicherplätze des zum Speichern der jeweiligen Werteinheiten der Börsenkarte vorgesehenen Bereiches des nichtflüchtigen Speichers in Teilbereiche (Stufen 1 bis 5) jeweils unterschiedlicher Wertigkeit (Stufenwerte 1, 8, 64, 512, 4096) aufgeteilt sind, wobei ein Löschen der Speicherplätze nur für sämtliche Speicherplätze eines Teilbereiches bestimmter Wertigkeit gleichzeitig möglich ist, und jeder Teilbereich nur gelöscht werden kann, nachdem das Einschreiben eines Übertragwertes in einen zuvor unbeschriebenen Speicherplatz des Teilbereiches der nächsthöheren Wertigkeit erfolgt ist,
**dadurch gekennzeichnet**, daß
den Werteinheiten wenigstens der Speicherplätze des höchstwertigen Teilbereiches (Stufe 5) in einem Freigaberegister der Börsenkarte zu speichernde Freigabewerte zugeordnet sind, welche entweder einen Freigabe- oder einen Sperrzustand für die jeweils zugeordnete Werteinheit der Speicherplätze des wenigstens höchstwertigen Teilbereiches repräsentieren, und eine Erhöhung des Gesamtwertes der Börsenkarte lediglich durch Änderung eines der Werteinheit eines Speicherplatzes zugeordneten Freigabewertes vom Sperr- in einen Freigabezustand ermöglicht wird.

2. Verfahren nach Anspruch 1, **dadurch gekennzeichnet,** daß die aufgrund des im Freigaberegister geschriebenen Freigabewertes ermöglichte Freigabe einer zugeordneten Werteinheit in dem Teilbereich der Speicherplätze einer bestimmten Wertigkeit zum Löschen des Teilbereiches der nächstniedrigeren Wertigkeit verwendet wird.

3. Verfahren nach Anspruch 1 oder 2, **dadurch gekennzeichnet**, daß die Wiederaufladung der Börsenkarte durch einen Schreibvorgang von einem oder mehreren Freigabewerten im Freigaberegister zur Freigabe der zugeordneten Werteinheiten in einem Teilbereich des Speichers ausgeführt wird.

4. Verfahren nach Anspruch 1 bis 3, **dadurch gekennzeichnet,** daß das Schreiben einer Werteinheit in einem Teilbereich des Speichers und damit der Verbrauch eines nachzuladenen Geldwertes erst ermöglicht wird, nachdem ein zugeordneter Freigabewert im Freigaberegister geschrieben worden ist.

5. Verfahren nach Anspruch 1 bis 4, **dadurch gekennzeichnet**, daß die Aufladung der Börsenkarte in einem Ladeterminal in vorbestimmten Schrittweiten oder deren Vielfachen entsprechend der Wertigkeit des bezüglich des Teilbereiches höchster Wertigkeit unmittelbar darunterliegenden und zu löschenden Teilbereiches durchgeführt wird.

6. Verfahren nach Anspruch 1 bis 5, **dadurch gekennzeichnet**, daß der sicherheitsrelevante Ladevorgang der Börsenkarte nur wertmindernde Schreibvorgänge oder wertneutrale Umbuchungen beinhaltet, und vor einer Freigabe einer Werteinheit eine Echtheitsprüfung der Börsenkarte im Ladeterminal vorgenommen wird.

7. Verfahren nach Anspruch 1 bis 6, **dadurch gekennzeichnet,** daß ein zusätzliches, nichtflüchtiges Backup-Bit in einem Speicherplatz innerhalb der Börsenkarte gleichzeitig mit einem Freigabewert geschrieben wird.

8. Verfahren nach Anspruch 7, **dadurch gekennzeichnet**, daß das zusätzliche, nichtflüchtige Backup-Bit über das Ladeterminal nach Abschluß des Entwertungsvorganges durch eine Sicherheitsprozedur ähnlich zu der beim Schreiben eines Freigabewertes zurückgesetzt wird.

9. Elektronische Börsenkarte für einen bargeldlosen Zahlungsverkehr mit einer integrierten Halbleiter-Schaltungsvorrichtung bestehend aus zumindest einer Adreß- und Steuerlogikschaltung und einem nichtflüchtigen Speicher, wobei zumindest ein Teil des nichtflüchtigen Speichers löschbar ist, und die Speicherplätze des zum Speichern des jeweiligen Entwertungszustandes der Börsenkarte vorgesehenen Bereiches des nichtflüchtigen Speichers in Teilbereiche (Stufen 1 bis 5) jeweils unterschiedlicher Wertigkeit (Stufenwerte 1, 8, 64, 512, 4096) aufgeteilt ist, wobei ein Löschen der Speicherplätze nur für alle Speicherplätze eines Teilbereiches bestimmter Wertigkeit gleichzeitig möglich ist, und jeder Teilbereich nur gelöscht werden kann, nachdem das Einschreiben eines Übertragwertes in eine zuvor unbeschriebene Speicherzelle des Teilbereiches der nächsthöheren Wertigkeit erfolgt ist,
**dadurch gekennzeichnet,** daß
den Werteinheiten wenigstens der Speicherplätze des höchstwertigen Teilbereiches (Stufe 5) in einem Freigaberegister der Börsenkarte zu speichernde Freigabewerte zugeordnet sind, welche entweder einen Freigabe- oder einen Sperrzustand für die jeweils zugeordnete Werteinheit der Speicherplätze des wenigstens höchstwertigen Teilbereiches repräsentieren, und die Halbleiter-Schaltungsvorrichtung derart ausgebildet ist, daß eine Erhöhung des Gesamtwert es der Börsenkarte lediglich durch Änderung eines der Werteinheit eines Speicherplatzes zugeordneten Freigabewertes vom Sperr- in einen Freigabezustand ermöglicht ist.

10. Börsenkarte nach Anspruch 9, **dadurch gekennzeichnet**, daß den Speicherplätzen wenigstens des höchstwertigen Teilbereiches (Stufe 5) des Speichers ein im wesentlichen gleich aufgebautes Duplikat des Freigaberegisters zugeordnet bzw. vorgeschaltet ist.

11. Börsenkarte nach Anspruch 9 oder 10, **dadurch gekennzeichnet**, daß die Anzahl der Speicherplätze des höchstwertigen Teilbereiches (Stufe 5) des Speichers die Summe aller für die Börsenkarte erlaubten Zahlungsvorgänge einschließlich der Aufladungen begrenzt.

12. Börsenkarte nach Anspruch 9 bis 11, **dadurch gekennzeichnet**, daß wenigstens der zum Speichern des jeweiligen Entwertungszustandes der Börsenkarte vorgesehene Bereich des nichtflüchtigen Speichers als mehrstufiger Zähler (Wert zähler) ausgebildet ist.

13. Börsenkarte nach Anspruch 12, **dadurch gekennzeichnet**, daß der mehrstufige Zähler (Wert zähler) als Oktalzähler ausgebildet ist.

14. Börsenkarte nach Anspruch 9 bis 13, **dadurch gekennzeichnet**, daß wenigstens der zum Speichern des jeweiligen Entwertungszustandes der Börsenkarte vorgesehene Bereich des nichtflüchtigen Speichers einen elektrisch löschbaren Festwertspeicher (EEPROM) aufweist.

## Claims

1. Method for recharging an electronic debit card for cashless clearing transactions having an integrated semiconductor switching device comprising at least one address and control logic circuit and a non-volatile memory, at least one part of the non-volatile memory being erasable, and the memory locations of the region, provided for storing the respective value units of the debit card, of the non-volatile memory being divided up into subregions (stages 1 to 5) of different significance (stage values 1, 8, 64, 512, 4096) in each case, erasure of the memory locations being possible simultaneously only for all the memory locations of a subregion of specific significance, and each subregion being capable of erasure only after a carry value has been written into a previously empty memory location of the subregion of the next highest significance, characterized in that the value units of at least the memory locations of the most significant subregion (stage 5) in a release register of the debit card are assigned release values to be stored, which represent either a release state or a blocking state for the respectively assigned value unit of the memory locations of the at least most significant subregion, and raising the total value of the debit card is possible only by changing a release value, assigned to the value unit of a memory location, from the blocking state into a release state.

2. Method according to Claim 1, characterized in that the release, rendered possible on the basis of the release value written in the release register, of an assigned value unit is used in the subregion of the memory locations of a specific significance to erase the subregion of the next lowest significance.

3. Method according to Claim 1 or 2, characterized in that the recharging of the debit card is carried out by a writing operation for one or more release values in the release register for the purpose of releasing the assigned value units in a subregion of the memory.

4. Method according to Claims 1 to 3, characterized in that the writing of a value unit in a subregion of the memory, and thus the consumption of a monetary value to be recharged, is not rendered possible until an assigned release value has been written in the release register.

5. Method according to Claims 1 to 4, characterized in that the charging of the debit card is carried out in a charging terminal in predetermined increments or multiples thereof in accordance with the significance of the subregion which is situated directly therebelow with reference to the most significant subregion and is to be erased.

6. Method according to Claims 1 to 5, characterized in that the security-relevant charging operation of the debit card contains only value-diminishing writing operations or rebookings which are neutral as to value, and an authenticity check of the debit card is undertaken in the charging terminal before a value unit is released.

7. Method according to Claims 1 to 6, characterized in that an additional, non-volatile backup bit is written in a memory location inside the debit card at the same time as a release value.

8. Method according to Claim 7, characterized in that the additional, non-volatile backup bit is reset via the charging terminal after termination of the devaluation operation by a security procedure similar to that during writing of a release value.

9. Electronic debit card for cashless clearing transactions having an integrated semiconductor switching device comprising at least one address and control logic circuit and a non-volatile memory, at least one part of the non-volatile memory being erasable, and the memory locations of the region, provided for storing the respective devaluation state of the debit card, of the non-volatile memory being divided up into subregions (stages 1 to 5) of different significance (stage values 1, 8, 64, 512, 4096) in each case, erasure of the memory locations being possible simultaneously only for all the memory locations of a subregion of specific significance, and each subregion being capable of erasure only after a carry value has been written into a previously empty memory cell of the subregion of the next highest significance, characterized in that the value units of at least the memory locations of the most significant subregion (stage 5) in a release register of the debit card are assigned release values to be stored, which represent either a release state or a blocking state for the respectively assigned value unit of the memory locations of the at least most significant subregion, and the semiconductor switching device is constructed in such a way that raising the total value of the debit card is possible only by changing a release value, assigned to the value unit of a memory location, from the blocking state into a release state.

10. Debit card according to Claim 9, characterized in that there is assigned to or connected upstream of the memory locations at least of the most significant subregion (stage 5) of the memory an essentially identically constructed duplicate of the release register.

11. Debit card according to Claim 9 or 10, characterized in that the number of memory locations of the most significant subregion (stage 5) of the memory limits the sum of all the payment operations, including chargings, permitted for the debit card.

12. Debit card according to Claims 9 to 11, characterized in that at least the region of the non-volatile memory provided for storing the respective devaluation state of the debit card is constructed as a multistage counter (value counter).

13. Debit card according to Claim 12, characterized in that the multistage counter (value counter) is constructed as an octal counter.

14. Debit card according to Claims 9 to 13, characterized in that at least the region of the non-volatile memory provided for storing the respective devaluation state of the debit card has an electrically erasable read-only memory (EEPROM).

## Revendications

1. Procédé de rechargement de cartes électroniques de crédit, pour effectuer des transactions financières sans argent liquide avec un dispositif à circuit semi-conducteur intégré composé au moins d'un circuit logique d'adressage et de commande et d'une mémoire non volatile, une partie au moins de la mémoire non volatile étant effaçable, et des emplacements de mémoire de la zone de la mémoire non volatile prévue pour mémoriser les unités de valeur respectives de la carte de crédit étant divisées en sous-domaines (niveaux 1 à 5) de poids différents respectivement (valeurs échelonnées 1, 8, 64, 512, 4096), un effacement desdits emplacements de mémoire n'étant simultanément possible que pour tous les emplacements de mémoire d'un sous-domaine d'un poids donné, et chaque sous-domaine ne pouvant être effacé après écriture d'une valeur reportée dans un emplacement de mémoire auparavant non écrit du sous-domaine de poids immédiatement supérieur,
**caractérisé en ce que**
des valeurs de validation à mémoriser dans un registre de validation de la carte de crédit sont affectées aux unités de valeur des emplacements de mémoire du sous-domaine de poids maximum (niveau 5) au moins, lesdites valeurs de validation représentant soit un état de validation soit un état de blocage pour l'unité de valeur correspondante des emplacements de mémoire du sous-domaine de poids maximum au moins, et une augmentation de la valeur totale de la carte de crédit n'est possible qu'en faisant passer une valeur de validation affectée à l'unité de valeur d'un emplacement de mémoire de l'état de blocage à un état de validation.

2. Procédé selon la revendication 1, **caractérisé en ce que** la validation d'une unité de valeur correspondante dans le sous-domaine des emplacements de mémoire d'un poids donné, permise en raison de la valeur de validation écrite dans le registre de validation, est utilisée pour effacer le sous-domaine de poids immédiatement inférieur.

3. Procédé selon la revendication 1 ou 2, **caractérisé en ce que** le rechargement de la carte de crédit est effectué par une opération d'écriture d'une ou de plusieurs valeurs de validation dans le registre de validation pour valider les unités de valeur correspondantes dans un sous-domaine de la mémoire.

4. Procédé selon les revendications 1 à 3, **caractérisé en ce que** l'écriture de l'unité de valeur dans un sous-domaine de la mémoire, et ainsi la consommation d'une valeur monétaire à recharger, n'est possible qu'après l'écriture d'une valeur de validation correspondante dans le registre de validation.

5. Procédé selon les revendications 1 à 4, **caractérisé en ce que** le chargement de la carte de crédit dans un terminal de chargement s'effectue par pas prédéterminés ou leurs multiples en fonction du poids du sous-domaine à effacer et se trouvant directement en dessous du sous-domaine de poids maximum.

6. Procédé selon les revendications 1 à 5, **caractérisé en ce que** l'opération de chargement de la carte de crédit affectant la sécurité ne comporte que des opérations d'écriture diminuant la valeur ou des transactions internes neutres en termes de valeur, et en ce que avant une validation d'une unité de valeur un contrôle d'authenticité de la carte de crédit est effectué dans le terminal de chargement.

7. Procédé selon les revendications 1 à 6, **caractérisé en ce que** un bit de sauvegarde supplémentaire non volatil est écrit dans un emplacement de mémoire à l'intérieur de la carte de crédit simultanément avec une valeur de validation.

8. Procédé selon la revendication 7, **caractérisé en ce que** le bit de sauvegarde supplémentaire non volatil est remis à zéro par l'intermédiaire du terminal de chargement à l'issue de l'opération de dévaluation par une procédure de sécurité semblable à celle utilisée lors de l'écriture d'une valeur de validation.

9. Carte électronique de crédit destinée à effectuer des transactions financières sans argent liquide avec un dispositif à circuit semi-conducteur intégré composé au moins d'un circuit logique d'adressage et de commande et d'une mémoire non volatile, une partie au moins de la mémoire non volatile étant effaçable, et des emplacements de mémoire de la zone de la mémoire non volatile prévue pour mémoriser l'état de dévaluation respectif de la carte de crédit étant divisés en sous-domaines (niveaux 1 à 5) de poids différents (valeurs échelonnées 1, 8, 64, 512, 4096), un effacement des emplacements de mémoire n'étant simultanément possible que pour tous les emplacements de mémoire d'un sous-domaine d'un poids donné, et chaque sous-domaine ne pouvant être effacé après écriture d'une valeur reportée dans une cellule-mémoire auparavant non écrite du sous-domaine de poids immédiatement supérieur,
**caractérisée en ce que**
des valeurs de validation à mémoriser dans un registre de validation de la carte de crédit sont affectées aux unités de valeur au moins des emplacements de mémoire du sous-domaine de poids maximum (niveau 5), lesdites valeurs de validation représentant soit un état de validation soit un état de blocage pour l'unité de valeur correspondante des emplacements de mémoire du sous-domaine de poids maximum au moins, et le dispositif à circuit semi-conducteur est conçu de façon à ce qu'une augmentation de la valeur totale de la carte de crédit ne soit possible qu'en faisant passer une valeur de validation affectée à l'unité de valeur d'un emplacement de mémoire de l'état de blocage à un état de validation.

10. Carte de crédit selon la revendication 9, **caractérisée en ce que** un double du registre de validation ayant une structure essentiellement similaire à ce dernier, est affecté aux emplacements de mémoire ou connecté en amont des emplacements de mémoire du sous-domaine de poids maximum de la mémoire (niveau 5) au moins.

11. Carte de crédit selon la revendication 9 ou 10, **caractérisée en ce que** le nombre d'emplacements de mémoire du sous-domaine de poids maximum (niveau 5) de la mémoire limite la somme de toutes les opérations de paiement permises pour la carte de crédit, y compris des chargements.

12. Carte de crédit selon les revendications 9 à 11, **caractérisée en ce que** au moins la zone de la mémoire non volatile prévue pour la mémorisation de l'état respectif de dévalorisation de la carte de crédit est conçue comme compteur multiniveau (compteur de valeurs).

13. Carte de crédit selon la revendication 12, **caractérisée en ce que** le compteur multiniveau (compteur de valeurs) est conçu comme compteur octal.

14. Carte de crédit selon les revendications 9 à 13, **caractérisée en ce que** au moins la zone de la mémoire non volatile prévue pour la mémorisation de l'état de dévaluation respectif de la carte de crédit comporte une mémoire à lecture seule effaçable électriquement (EEPROM).
